# EUROPEAN PATENT SPECIFICATION

(11) **EP 1 555 401 B1**
(45) Date of publication and mention of the grant of the patent: **07.04.2010**
(21) Application number: 05000635.2
(22) Date of filing: 13.01.2005
(51) Int. Cl.: F01N 9/00, F01N 11/00, F01N 3/08, F02D 41/02, F01N 3/029, F01N 3/025, F01N 3/035

(54) **Exhaust purifying apparatus for internal combustion engine**
Abgasreinigungsanlage für Verbrennungskraftmaschine
Dispositif de purification des gaz d'échappement pour moteur à combustion interne

(30) Priority: 14.01.2004 JP 2004007136
(43) Date of publication of application: 20.07.2005
(73) Proprietor: Toyota Jidosha Kabushiki Kaisha, Toyota-shi, Aichi-ken, 471-8571 (JP)
(72) Inventor: Miyazaki, Masataka, Toyota-shi Aichi-ken 471-8571 (JP); Miyazaki, Hiroyuki, Toyota-shi Aichi-ken 471-8571 (JP); Kobayashi, Shigeru, Toyota-shi Aichi-ken 471-8571 (JP)
(74) Representative: Kuhnen & Wacker

(56) References cited:
- EP-A- 0 743 429
- EP-A- 1 234 959
- EP-A- 1 460 245
- WO-A-02/27162
- DE-A1- 10 108 182
- FR-A- 2 840 820
- FR-A- 2 855 213
- US-B1- 6 405 528
- PATENT ABSTRACTS OF JAPAN vol. 008, no. 230 (M-333), 23 October 1984 (1984-10-23) & JP 59 113232 A (NISSAN JIDOSHA KK), 29 June 1984 (1984-06-29)
- PATENT ABSTRACTS OF JAPAN vol. 2000, no. 03, 30 March 2000 (2000-03-30) & JP 11 336530 A (NISSAN MOTOR CO LTD), 7 December 1999 (1999-12-07)

## Description

### BACKGROUND OF THE INVENTION

The present invention relates to an exhaust purifying apparatus for an internal combustion engine.

Exhaust systems of some engines include an exhaust purifying member such as a carrier incorporating a NOx purifying catalyst that removes nitrogen oxide, a PM (particulate matter) filter for collecting particulate matter, and a DPNR catalyst formed by incorporating the NOx catalyst into a PM filter.

In some cases, additive may be supplied to an exhaust purifying member for recovering purifying function of the exhaust purifying member. For example, as described in Japanese Patent No. 2722987, fuel is supplied, as the additive, to the PM filter incorporating a NOx catalyst. The NOx absorbed by the catalyst is thus reduced and released, such that the NOx removing function of the catalyst is recovered. Further, if the accumulation amount of the particulate matter collected by the PM filter is increased, pressure loss caused by the PM filter is increased. However, the fuel supplied to the PM filter as the additive burns out the particulate matter collected by the filter, so that the PM filter is regenerated.

DE 101 08 182 A discloses an exhaust purifying apparatus, also being a filter, controlled by a downstream thermocouple.

Although the additive supply is effective in recovering the function of the exhaust purifying member, it may lead to the following problems. That is, the additive supplied to'the exhaust purifying member is essentially evaporated and burned out through combustion or oxidization in the purifying member. However, if some of the additive is adhered to the exhaust purifying member without being combusted or oxidized, the adhered additive may function as a binder and adsorb particulate matter and the like, thus clogging the exhaust purifying member.

### SUMMARY OF THE INVENTION

Accordingly, it is an objective of the present invention to provide an exhaust purifying apparatus for an internal combustion engine capable of reliably diagnosing the clogging state of an exhaust purifying member.

To achieve the foregoing and other objectives and in accordance with the purpose of the present invention, the invention provides an exhaust purifying apparatus for an internal combustion engine according to claim 1.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiment together with the accompanying drawings in which:
Fig. 1 is a view schematically showing an internal combustion engine and the vicinity thereof to which an exhaust purifying apparatus according to the embodiment of the present invention is applied;
Fig. 2 is a flowchart showing a procedure for controlling the exhaust temperature according to the embodiment;
Fig. 3 is a graph explaining the principles of diagnosis of the clogging state of an exhaust purifying member according to the embodiment;
Fig. 4 is a graph illustrating variations of the exhaust temperature, the amount of collected matter, and the amount of added fuel, when an exhaust temperature control procedure is performed;
Fig. 5 is a flowchart showing distal portion regeneration according to the embodiment;
Fig. 6 is a flowchart showing distal portion regeneration not according to the present invention;
Fig. 7 is a graph showing temperature difference between the first and second exhaust temperatures versus clogging degree of an exhaust purifying member in a modification of the embodiment; and
Fig. 8, not according to the invention, is a graph showing first exhaust temperature versus clogging degree of an exhaust purifying member.

### DETAILED DESCRIPTION OF THE PREFERRED EMBODIMENTS

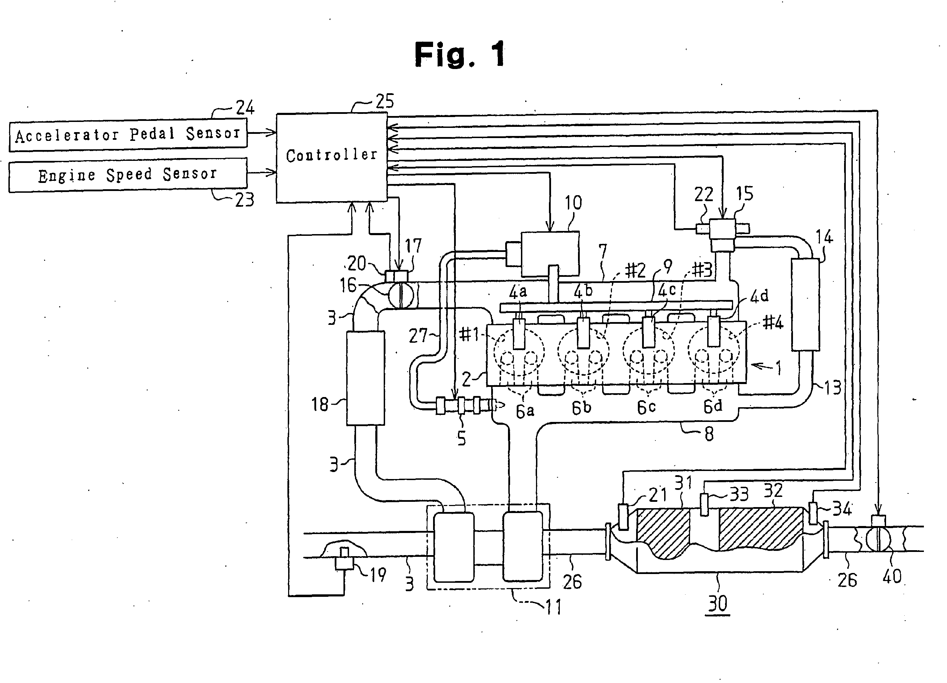

An exhaust purifying apparatus for an engine according to the embodiment of the present invention will now be described with reference to Figs. 1 to 5.

Fig. 1 schematically shows a diesel engine 1, a controller 25 of the diesel engine 1, and the vicinity of the engine 1. The engine 1 includes a plurality of cylinders #1, #2, #3, #4. A plurality of fuel injection valves 4a, 4b, 4c, 4d are provided in a cylinder head 2. Each of the fuel injection valves 4a to 4b injects fuel into a corresponding one of the combustion chambers defined by the cylinders #1 to #4. Further, a plurality of intake ports and exhaust ports 6a, 6b, 6c, 6d are defined in the cylinder head 2 in correspondence with the cylinders #1 to #4. Each of the intake ports introduces the ambient air into the corresponding cylinder #1 to #4. Each of the exhaust ports 6a to 6d discharges combustion gas from the corresponding cylinder #1 to #4.

The fuel injection valves 4a to 4d are connected to a common rail 9 in which a high-pressure fuel is retained. The common rail 9 is connected to a supply pump 10. The supply pump 10 draws fuel from a fuel tank and supplies the high-pressure fuel to the common rail 9. The high-pressure fuel is then injected into the cylinders #1 to #4 by the injection valves 4a to 4b, when the valves 4a to 4b are opened.

The intake ports are connected to an intake manifold 7. The intake manifold 7 is connected to an intake passage 3. A throttle valve 16 is disposed in the intake passage 3 for adjusting the intake air amount. The exhaust ports 6a to 6d are connected to an exhaust manifold 8. The exhaust manifold 8 is connected to an exhaust passage 26.

A catalytic device 30 is provided in the exhaust passage 26 for purifying exhaust gas. Two exhaust purifying members are arranged in series in the catalytic device 30. The exhaust purifying members include a first exhaust purifying member and a second exhaust purifying member. The first exhaust purifying member corresponds to a NOx storage reduction catalyst 31, which is provided at a relatively upstream position with respect to the exhaust flow, for removing NOx from exhaust gas. The second exhaust purifying member corresponds to a Diesel Particulate-NOx Reduction system (DPNR) catalyst 32, which is located downstream of the catalyst 31 with respect to the exhaust flow, for reducing the amount of the particulate matter or NOx released from the exhaust into the air. The DPNR catalyst 32 is formed by incorporating a NOx storage reduction catalyst into a porous ceramic structure. The particulate matter contained in the exhaust gas is collected by the DPNR catalyst 32 when passing through a porous wall of the catalyst 32. Further, when the air-fuel ratio of exhaust gas is lean, NOx in the exhaust is stored in the NOx storage reduction catalyst 31. In contrast, if the air-fuel ratio of the exhaust gas is rich, the stored NOx is reduced and released by substances such as HC and CO.

The engine 1 also includes an EGR device. The EGR device introduces some of the exhaust gas into the intake air, thus lowering the combustion temperature in the cylinders. This reduces the generation amount of NOx. The EGR device is configured by an EGR passage 13 connecting the intake passage 3 to the exhaust passage 26, an EGR valve 15 disposed in the EGR passage 13, an EGR cooler 14, and the like. By adjusting the opening degree of the EGR valve 15, the reflux amount of the exhaust flowing from the exhaust passage 26 to the intake passage 3, which is the EGR amount, is controlled. The EGR cooler 14 cools the exhaust gas flowing in the EGR passage 13. The EGR valve 15 is provided with an EGR valve opening degree sensor 22, which detects the opening degree of the EGR valve 15, or an EGR valve opening degree EA.

The engine 1 also has a turbocharger 11 for supercharging intake air to each of the cylinders #1 to #4, using exhaust pressure. An intercooler 18 is disposed in a section of the intake passage 3 between an intake turbine and the throttle valve 16. The intercooler 18 cools the intake air warmed through supercharging by the turbocharger 11.

An exhaust throttle valve 40 is provided in a section of the exhaust passage 26 downstream of the catalytic device 30 with respect to the exhaust flow. The exhaust throttle valve 40 adjusts the flow rate of exhaust gas in the exhaust passage 26. As the opening degree of the exhaust throttle valve 40 becomes smaller, the flow rate of exhaust gas also becomes smaller.

Various sensors are installed in the engine 1 for detecting the operational state of the engine 1. For example, an airflow meter 19 detects an intake air amount GA in the intake passage 3. A throttle opening degree sensor 20 detects the opening degree of the throttle valve 16, or a throttle opening degree TA. A first temperature sensor 33 is provided downstream of the NOx storage reduction catalyst 31 with respect to the exhaust flow for detecting a first exhaust temperature Thi. The first exhaust temperature Thi corresponds to the exhaust temperature at the exit of the NOx storage reduction catalyst 31. A second temperature sensor 34 is disposed downstream of the DPNR catalyst 32, the other exhaust purifying member located downstream of the NOx storage reduction catalyst 31, for detecting a second exhaust temperature Tho. The second exhaust temperature Tho corresponds to the exhaust temperature at the exit of the DPNR catalyst 32. An engine speed sensor 23 detects the rotation speed of a crankshaft, or an engine speed NE. An accelerator pedal sensor 24 detects the depression amount of an accelerator pedal, or a pedal depression degree ACCP. An air-fuel ratio sensor 21 detects an air-fuel ratio λ of exhaust.

The outputs of these sensors are inputted to the controller 25. The controller 25 is configured mainly by a microcomputer including a central processing unit (CPU), a read only memory (ROM), a random access memory (RAM), a timer-counter, an input interface, and an output interface. The ROM pre-stores various programs and maps. The RAM temporarily stores computation results obtained by the CPU. The controller 25 performs various control procedures of the engine 1, including those for the fuel injection amount and injection timing of the fuel injection valves 4a to 4d, the displacement pressure of the supply pump 10, the actuation amount of an actuator 17 selectively opening and closing the throttle valve 16, the opening degree of the EGR valve 15, and actuation of the exhaust throttle valve 40.

Further, an injection nozzle 5 is secured to the cylinder head 2 and forms an additive supply mechanism for supplying fuel to the NOx storage reduction catalyst 31 and the DPNR catalyst 32. The injection nozzle 5 injects fuel, as additive, to an exhaust port 6a of the first cylinder #1. The injected fuel reaches the NOx storage reduction catalyst 31 and the DPNR catalyst 32, together with exhaust gas. The injection nozzle 5 and the supply pump 10 are connected to each other through a fuel supply pipe 27, such that gas oil, the fuel, is supplied to the injection nozzle 5. The injection nozzle 5 is configured identical to the fuel injection valves 4a to 4d. The controller 25 controls the injection amount and injection timing of the injection nozzle 5.

In the embodiment, the additive supply mechanism supplies fuel to the NOx storage reduction catalyst 31 and the DPNR catalyst 32 for the following reasons:
A. In diesel engines, the exhaust air-fuel ratio is normally lean. Thus, before the storage amount of NOx in the NOx storage reduction catalyst 31 and the DPNR catalyst 32 reaches a limit, the exhaust air-fuel ratio must be enriched for reducing and releasing the NOx stored in the catalysts 31, 32. Accordingly, when the NOx storage amount, as estimated based on the engine operational state or the like, reaches a predetermined limit value, the controller 25 performs a NOx reduction procedure by supplying fuel through the injection nozzle 5. The fuel functions as a NOx reducing agent when received by the NOx storage reduction catalyst 31 and the DPNR catalyst 32. Further, the fuel consumes oxygen as combusted in the NOx storage reduction catalyst 31 and the DPNR catalyst 32, such that the exhaust fuel-air ratio is enriched. The NOx reduction procedure maintains the NOx removing functions of the catalysts 31, 32.
B. As the accumulation amount of particulate matter in the DPNR catalyst 32 becomes larger, the pressure loss caused by the DPNR catalyst 32 becomes greater. Thus, before the pressure loss becomes excessively large and affects the engine operational state adversely, the accumulated particulate matter must be decreased, or a regeneration of the DPNR catalyst 32 must be performed. Accordingly, when the accumulation amount of particulate matter, as estimated based on the engine operational state or the difference between an upstream exhaust pressure and a downstream exhaust pressure of the catalytic device 30, reaches a predetermined limit value, the controller 25 performs the regeneration of the DPNR catalyst 32 by supplying fuel through the injection nozzle 5. The fuel is combusted when reaching the DPNR catalyst 32, such that the particulate matter is ignited and eventually burned out. In other words, the fuel functions as a promoter for burning the particulate matter. The regeneration of the DPNR catalyst 32 thus decreases the accumulation amount of particulate matter in the DPNR catalyst 32.
C. The NOx storage reduction catalyst also absorbs SOx (sulfur oxides) generated from sulfur, which is originated in fuel and lubricant oil. Since the storage capacity of the NOx storage reduction catalyst is limited, the actual amount of NOx allowed to be stored in the catalyst may be reduced if the absorption amount of SOx increases. In other words, the NOx removing function of the NOx storage reduction catalyst is lowered due to so-called SOx poisoning. However, it is known that SOx absorbed by the NOx storage reduction catalyst is released from the catalyst in a high-temperature reducing atmosphere of approximately 600 degrees Celsius. It is thus possible to reduce the amount of SOx absorbed by the NOx storage reduction catalyst under this condition. Accordingly, when the absorption amount of SOx, as estimated based on the engine operation sate or the like, reaches a predetermined limit value, the controller 25 executes a SOx poisoning recovery procedure by injecting fuel through the injection nozzle 5. The fuel is combusted in the NOx storage reduction catalyst 31 and the DPNR catalyst 32, generating heat for heating the catalysts 31, 32. Also, the fuel combustion consumes oxygen in the vicinity of the catalysts 31, 32, lowering the oxygen concentration in the vicinity of the catalysts 31, 32. The aforementioned condition, or the high-temperature reducing atmosphere, is thus satisfied, enabling SOx accumulated by the catalysts 31, 32 to be reduced and released. The fuel also functions as a SOx reducing agent.

The fuel is supplied to the NOx storage reduction catalyst 31 and the DPNR catalyst 32 for the above reasons A to C.

The NOx storage reduction catalyst 31 or the DPNR catalyst 32 may be damaged when heated excessively. Particularly, since the DPNR catalyst 32 receives the exhaust gas heated in the NOx storage reduction catalyst 31, the temperature of the DPNR catalyst 32 tends to become greater than that of the NOx storage reduction catalyst 31. Therefore, if the exhaust temperature is controlled to a target value for suppressing excessive heating of the DPNR catalyst 32, the NOx storage reduction catalyst 31 is also prevented from being heated excessively.

Since the additive is combusted in the DPNR catalyst 32, excessive heating of the DPNR catalyst 32 cannot be suppressed by controlling the exhaust temperature at a position upstream of the DPNR catalyst 32 with respect to the exhaust flow (the first exhaust temperature Thi). In contrast, if the exhaust temperature at the exit of the DPNR catalyst 32 (the second exhaust temperature Tho) is controlled, a temperature rise caused by the additive combustion in the catalyst 32 is taken into account of the control procedure. The temperature of the DPNR catalyst 32 is thus adjusted to a value close to the target. In the embodiment, by adjusting the amount of the fuel supplied by the injection nozzle 5, the exhaust temperature at a position downstream of the DPNR catalyst 32, which is the second exhaust temperature Tho detected by the second temperature sensor 34, is controlled to a target exhaust temperature PT.

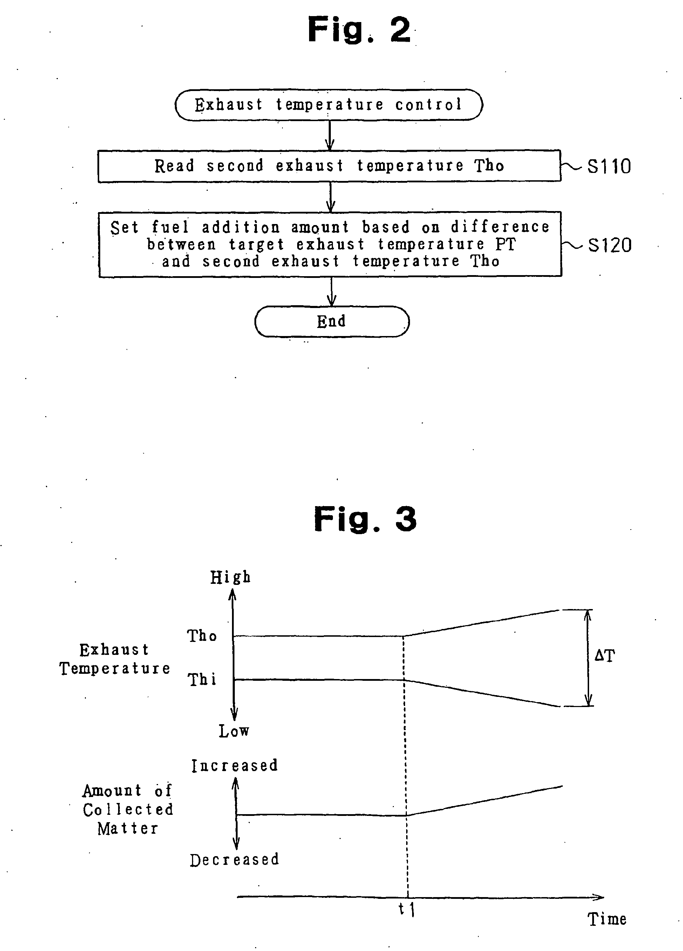

Fig. 2 shows a procedure for controlling the exhaust temperature executed by the controller 25. The procedure corresponds to exhaust temperature control means.

First, the second exhaust temperature Tho is read by the controller 25 (in step S110). Next, based on the difference between the target exhaust temperature PT and the second exhaust temperature Tho, the amount of the fuel to be supplied by the injection nozzle 5 is set (in step S120). The procedure is then suspended. The target exhaust temperature PT corresponds to a temperature at which the exhaust purifying performance of the DPNR catalyst 32 is maintained and excessive heating of the catalyst 32 is suppressed. The target exhaust temperature PT is set in correspondence with the engine operational state, which is, for example, the engine load correlated with the exhaust temperature. Further, as the difference between the target exhaust temperature PT and the second exhaust temperature Tho becomes larger, or the second exhaust temperature Tho becomes higher than the target exhaust temperature PT, the fuel addition amount becomes smaller. By enabling the injection nozzle 5 to inject fuel in correspondence with the set fuel addition amount, the exhaust temperature downstream of the DPNR catalyst 32 is controlled to the target exhaust temperature PT. In other words, the temperature of the DPNR catalyst 32 is maintained at a predetermined value in correspondence with the engine operational state.

However, the fuel supply may cause the following problem. The additive supplied to the exhaust purifying members including the NOx storage reduction catalyst 31 and the DPNR catalyst 32 are essentially evaporated and burned out through combustion in the exhaust purifying members and oxidization. However, if some of the additive is adhered to the exhaust purifying members without being burned out or oxidized, the adhered additive may become a binder and adsorb 'the particulate matter or the like, clogging the exhaust purifying members.

Also, although the exhaust purifying members including the NOx storage reduction catalyst 31 and the DPNR catalyst 32 are heated by the heat generated through the additive oxidization and combustion in the exhaust purifying members, the temperature distribution in each of the exhaust purifying members is non-uniform. More specifically, the temperature of the NOx storage reduction catalyst 31 or that of the DPNR catalyst 32 becomes higher toward a downstream side of the exhaust flow, due to the heat generated through the additive oxidization and combustion. That is, the temperature of the NOx storage reduction catalyst 31 or that of the DPNR catalyst 32 becomes lower toward an upstream side of the exhaust flow. Thus, the fuel adhered to a distal, upstream portion of each exhaust purifying member tends to be hardly heated to the temperature sufficiently high for causing the. fuel to be oxidized or combusted. In some cases, the additive remains adhered to the'distal portion of the fuel purifying member and becomes a binder. The additive thus adsorbs particulate matter from exhaust, clogging the NOx storage reduction catalyst 31 or the DPNR catalyst 32.

Further, in the embodiment, the NOx storage reduction catalyst 31 is arranged upstream of the DPNR catalyst 32 with respect to the exhaust flow, clogging may occur particularly at a distal portion of the NOx storage reduction catalyst 31. The embodiment thus includes diagnosis means for diagnosing the clogging state of the NOx storage reduction catalyst 31. More specifically, distal portion regeneration is performed for diagnosing the clogging state of the NOx storage reduction catalyst 31 and lowering the clogging degree.

Fig. 3 shows the principles of such diagnosis. In other words, Fig. 3 shows variation of the first exhaust temperature Thi and that of the second exhaust temperature Tho when the fuel injection is performed through the injection nozzle 5 with the engine operated in a certain operational state.

If the NOx storage reduction catalyst 31 is free from collected matter such as deposit, or free from clogging, the fuel injected by the injection nozzle 5 is sent to and combusted in the NOx storage reduction catalyst 31 together with exhaust gas. The exhaust temperature at the exit of the NOx storage reduction catalyst 31, or the first exhaust temperature Thi detected by the first temperature sensor 33, is thus heated. The exhaust gas exiting the NOx storage reduction catalyst 31 is further heated through exhaust purification of the DPNR catalyst 32 when passing through the catalyst 32. The second exhaust temperature Tho detected by the second temperature sensor 34 is thus higher than the first exhaust temperature Thi.

If the amount of collected matter in the NOx storage reduction catalyst 31 starts to increase at time t1, the clogging degree of the catalyst 31 starts to become larger. This decreases the communication area for exhaust gas in the NOx storage reduction catalyst 31. Some of the fuel thus exits the catalyst 31 without being combusted. Therefore, as the clogging degree of the NOx storage reduction catalyst 31 becomes larger, the exhaust temperature at the exit of the catalyst 31 (the first exhaust temperature Thi) becomes lower. However, the fuel exiting the catalyst 31 without being combusted is combusted when passing through the DPNR catalyst 32. Thus, as the clogging degree of the NOx storage reduction catalyst 31 becomes larger, the exhaust temperature downstream of the DPNR catalyst 32 (the second exhaust temperature Tho), which is located downstream of the catalyst 31, becomes higher. Accordingly, if the NOx storage reduction catalyst 31 is clogged, a temperature difference ΔT between the exhaust temperature downstream of the catalyst 31 (the first exhaust temperature Thi), or the exhaust temperature upstream of the DPNR catalyst 32, and the exhaust temperature downstream of the DPNR catalyst 32 (the second.exhaust temperature Tho) becomes greater. It is thus possible to use the temperature difference ΔT as an indicator of the clogging degree of the NOx storage reduction catalyst 31.

Even if the exhaust temperature in the exhaust passage 26 is varied depending on the engine operational state, the second exhaust temperature Tho changes in a manner corresponding to the first exhaust temperature Thi. Thus, the temperature difference ΔT is essentially unaffected by the variation of the exhaust temperature depending on the engine operational state. Accordingly, by using the temperature difference ΔT as the indicator of the clogging degree of the NOx storage reduction catalyst 31, the clogging state of the catalyst 31 is diagnosed reliably, regardless of the exhaust temperature variation in the exhaust passage 26 depending on the engine operational state.

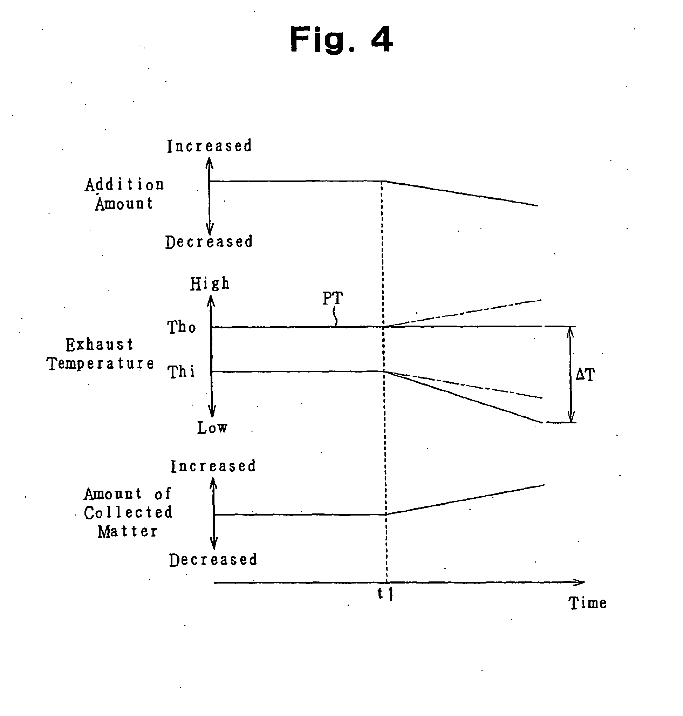

In the embodiment, the exhaust temperature control procedure is performed such that the second exhaust temperature Tho is adjusted to a certain value corresponding to the engine operational state. Therefore, when the NOx storage reduction catalyst 31 is clogged, the first exhaust temperature Thi and the second exhaust temperature Tho are varied as indicated by Fig. 4. In Fig. 4, the dotted lines indicate variations of the first and second exhaust temperatures Thi, Tho when the exhaust temperature control procedure is not performed (corresponding to the exhaust temperature variations indicated in Fig. 3).

As has been described, when the amount of collected matter in the NOx storage reduction catalyst 31 starts to increase at time t1 such that the clogging degree of the catalyst 31 becomes greater, the second exhaust temperature Tho starts to rise gradually (as indicated by the corresponding dotted line in Fig. 4). As the second exhaust temperature Tho becomes higher, the difference between the target exhaust temperature PT and the second exhaust temperature Tho becomes larger. Therefore, the amount of fuel injected by the injection nozzle 5 is decreased, such that the second exhaust temperature Tho is maintained at the target exhaust temperature PT corresponding to the current engine operational state. In contrast, when the amount of collected matter in the NOx storage reduction catalyst 31 starts to increase at time t1 such that the clogging degree of the catalyst 31 becomes greater, the first exhaust temperature Thi starts to decrease gradually. However, since the fuel injection amount is reduced as aforementioned, the amount of the fuel combusted in the NOx storage reduction catalyst 31 is also decreased. The heat generated through the fuel combustion is thus reduced. Therefore, the first exhaust temperature Thi with the NOx storage reduction catalyst 31 clogged is lower than the first exhaust temperature Thi when the exhaust temperature control procedure is not performed (as indicated by the corresponding dotted line in Fig. 4). That is, even if the second exhaust temperature Tho is controlled to a substantially constant value through the exhaust temperature control procedure, the first exhaust temperature Thi is lowered in correspondence with the clogging degree of the NOx storage reduction catalyst 31. In other words, regardless of the exhaust temperature control procedure, the temperature difference ΔT is varied in correspondence with the clogging degree of the catalyst 31. Accordingly, even when the exhaust temperature control procedure is performed, the clogging degree of the NOx storage reduction catalyst 31 can be diagnosed based on the temperature difference ΔT.

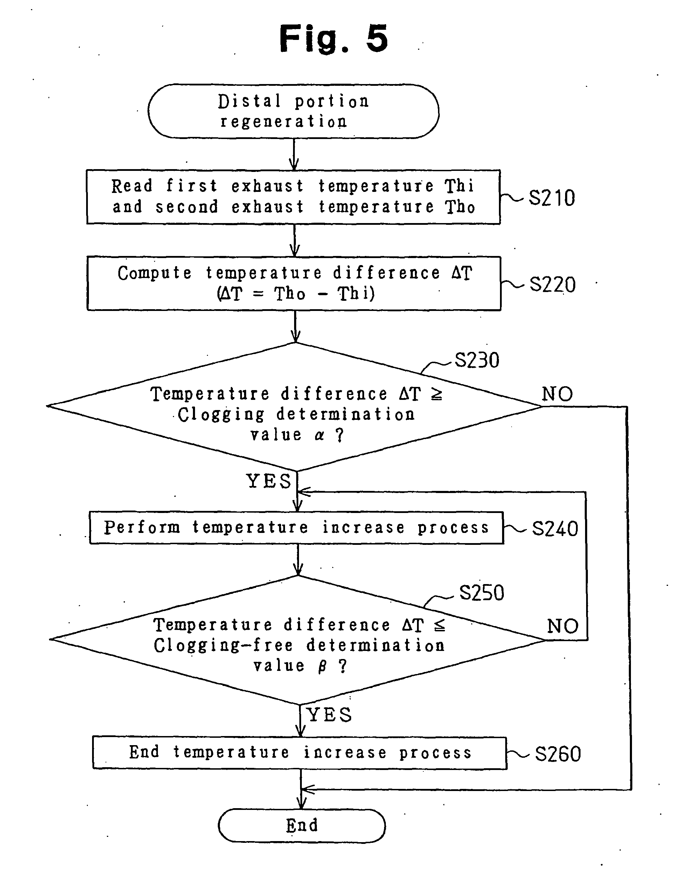

Fig. 5 indicates the distal portion regeneration using the principles of such clogging state diagnosis. The procedure is repeatedly executed by the controller 25 at predetermined time intervals under the condition that fuel injection is performed through the injection nozzle 5.

First, the first exhaust temperature Thi and the second exhaust temperature Tho are read by the controller 25 (in step S210). The temperature difference ΔT between the first exhaust temperature Thi and the second exhaust temperature Tho (ΔT = Tho - Thi) is then computed (in step S220).

Subsequently, it is determined whether or not the temperature difference ΔT is equal to or greater than a clogging determination value α (in step S230). The clogging determination value α is used for determining whether or not the NOx storage reduction catalyst 31 is clogged and set to a predetermined value exceeding the temperature difference ΔT at which the catalyst 31 is not clogged. If it is determined that the temperature difference ΔT is smaller than the clogging determination value α (step S230: NO), the controller 25 determines that the current temperature difference ΔT is relatively small and thus the clogging degree of the NOx storage reduction catalyst 31 is relatively low, or the catalyst 31 is not clogged. The procedure is then suspended.

In contrast, if it is determined that the temperature difference ΔT is equal to or greater than the clogging determination value α (step S230: YES), the controller 25 determines that the current temperature difference ΔT is relatively great and thus the clogging degree of the NOx storage reduction catalyst 31 is relatively high, or the catalyst 31 is clogged. Therefore, in order to decrease the amount of collected matter in the catalyst 31, the cause of clogging, a temperature increase process of the NOx storage reduction catalyst 31 is executed (in step S240). The temperature increase process corresponds to a heating means. More specifically, the temperature increase process is performed in the following manner.

First, a certain amount of fuel needed for regeneration of the distal portion of the catalyst 31 is injected by the injection nozzle 5. The fuel is then combusted in the NOx storage reduction catalyst 31. At this stage, if the temperature of the catalyst 31 is excessively low, the injected fuel may promote clogging of the NOx storage reduction catalyst 31. Thus, the exhaust flow is decreased through adjustment of an engine control amount. More specifically, if the exhaust flow is decreased, the flow rate of the exhaust gas passing through the NOx storage reduction catalyst 31 is also reduced. This extends the time for purifying the exhaust gas in the catalyst 31. The reactive heat generated through purification is thus increased such that the NOx storage reduction catalyst 31 is heated effectively. Accordingly, adhesion of the injected fuel is suppressed and combustion of the fuel is promoted, ensuring the catalyst 31 to be heated. This burns out the collected matter in the NOx storage reduction catalyst 31 and reduces the amount of collected matter.

Further, the aforementioned adjustment of the engine control amount includes at least one of the followings: temporarily decreasing the opening degree of the throttle valve 16 for adjusting the intake air amount; temporarily decreasing the opening degree of the EGR valve 15 for adjusting the EGR amount; and temporarily decreasing the opening degree of the exhaust throttle valve 40 for adjusting the exhaust flow. Through such adjustment of the engine control amount, the actual exhaust flow can be lowered.

Next, it is determined whether or not the temperature difference ΔT is equal to or smaller than a clogging-free determination value β (in step S250). The clogging-free determination value β is used for determining whether or not the NOx storage reduction catalyst 31 is free from clogging. In the embodiment, the clogging-free determination value β is set to a predetermined value corresponding to the temperature difference ΔT at which the NOx storage reduction catalyst 31 is not clogged. By setting the clogging-free determination value β to a value smaller than at least the clogging determination value α, at least lowering of the clogging degree can be diagnosed.

If the temperature difference ΔT is determined to be larger than the clogging-free determination value β (step S250: NO), the procedure of step S240 is continued. In other words, the temperature increase process of the NOx storage reduction catalyst 31 is continuously performed.

In contrast, if the temperature difference ΔT is determined to be equal to or smaller than the clogging-free determination value β (step S250: YES), it is determined that the amount of collected matter in the NOx storage reduction catalyst 31 has been reduced sufficiently by the temperature increase process, or the catalyst 31 has been freed from clogging. The temperature increase process is thus ended (in step S260) and the procedure of Fig. 5 is ended.

In accordance with the above-described distal portion regeneration, the clogging state of the NOx storage reduction catalyst 31 is diagnosed and the clogging degree thereof is lowered.

The embodiment has the following advantages.
(1) In response to the fuel supply, the temperature difference ΔT between the first exhaust temperature Thi, the exhaust temperature at the exit of the NOx storage reduction catalyst 31, and the second exhaust temperature Tho, the exhaust temperature at the exit of the DPNR catalyst 32 located downstream of the catalyst 31, is computed. The temperature difference ΔT is used as the indicator of the clogging degree of the NOx storage reduction catalyst 31. It is thus possible to reliably diagnose the clogging state of the catalyst 31.
   Even if the exhaust temperature in the exhaust passage 26 is varied depending on the engine operational state, the second exhaust temperature Tho changes in correspondence with the first exhaust temperature Thi. The temperature difference ΔT is thus hardly affected by the variation of the exhaust temperature depending on the engine operational state. Accordingly, by diagnosing the clogging state of the NOx storage reduction catalyst 31 based on the temperature difference ΔT, the diagnosis is reliably accomplished regardless of such variation of the exhaust temperature.
(2) The amount of the fuel injected by the injection nozzle 5 is adjusted such that the second exhaust temperature Tho corresponds to the target exhaust temperature PT. The temperature of the DPNR catalyst 32 is thus reliably controlled.
(3) As the second exhaust temperature Tho becomes higher than the target exhaust temperature PT, the fuel injection amount is decreased. Accordingly, excessive heating of the DPNR catalyst 32 is reliably suppressed.
(4) If it is determined that the NOx storage reduction catalyst 31 is clogged based on the above-described diagnosis, the temperature increase process of the catalyst 31 is executed. This lowers the clogging degree of the NOx storage reduction catalyst 31. Since the clogging state of the NOx storage reduction catalyst 31 is reliably diagnosed in the embodiment, determination whether or not to perform the temperature increase process is carried out in an appropriate manner.
(5) In the temperature increase process, at least one of the opening degree of the throttle valve 16 for adjusting' the intake air amount, the opening degree of the EGR (exhaust gas recirculation) valve 15 for adjusting the EGR amount, and the opening degree of the exhaust throttle valve 40 is adjusted as the engine control amount, such that the exhaust flow rate is reduced. This extends the time for purifying the exhaust gas in the NOx storage reduction catalyst 31, and the reactive heat generated through purification is increased. The NOx storage reduction catalyst 31 is thus heated effectively.
(6) The fuel is injected by the additive supply mechanism disposed in the exhaust passage 26, which is the injection nozzle 5. The fuel is thus reliably supplied to the NOx storage reduction catalyst 31 and the DPNR catalyst 32 as the additive.
(7) The DPNR catalyst 32 functions as a filter for collecting particulate matter from exhaust gas, as well as a NOx catalyst for removing NOx in the exhaust gas. Thus, in many cases, additive is added to the DPNR catalyst 32 in order to burn out the collected particulate matter or reducing and releasing the absorbed NOx and the like. Since the NOx storage reduction catalyst 31 is located upstream of the DPNR catalyst 32 with respect to the exhaust flow and the temperature of the NOx storage reduction catalyst 31 is lower than that of the DPNR catalyst 32, the NOx storage reduction catalyst 31 is susceptive to clogging. However, in the embodiment, the clogging state of the catalyst 31 is reliably diagnosed and the clogging degree thereof is reduced by the temperature increase process.

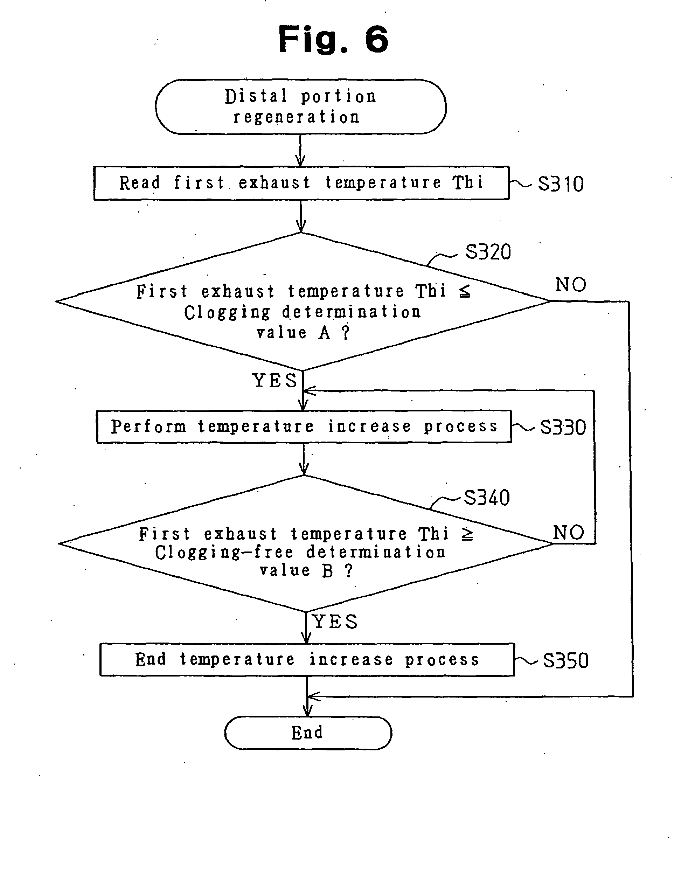

An exhaust purifying apparatus for an engine not according to the present invention will now be described with reference to Fig. 6.

In the embodiment, the clogging state of the NOx storage reduction catalyst 31 is diagnosed based on the temperature difference ΔT between the first exhaust temperature Thi and the second exhaust temperature Tho. As has been described, the first exhaust temperature Thi is lowered when the NOx storage reduction catalyst 31 is clogged, as compared to when the catalyst 31 is not clogged. It is thus determined that the clogging degree of the catalyst 31 becomes greater as the lowering amount of the first exhaust temperature Thi becomes larger. Therefore, not according to the invention, the clogging state of the NOx storage reduction catalyst 31 is diagnosed based on the first exhaust temperature Thi, rather than the temperature difference ΔT.

Fig. 6 shows a distal portion regeneration of the second embodiment. The procedure of Fig. 6 is repeatedly executed by the controller 25 at predetermined time intervals under the condition that the fuel supply through the injection nozzle 5 is conducted.

First, the first exhaust temperature Thi is read by the controller 25 (in step S310). Next, it is determined whether or not the first exhaust temperature Thi is equal to or lower than a clogging determination value **A** (in step S320). The clogging determination value **A** is used for determining whether or not the NOx storage reduction catalyst 31 is clogged and is set to a predetermined value lower than the first exhaust temperature Thi at which the catalyst 31 is free from clogging. If the first exhaust temperature Thi is determined to be greater than the clogging determination value **A** (step S320: NO), it is determined that the current first exhaust temperature Thi is relatively high and thus the clogging degree of the NOx storage reduction catalyst 31 is relatively low. That is, it is determined that the NOx storage reduction catalyst 31 is free from clogging. The procedure is thus ended.

In contrast, if the first exhaust temperature Thi is determined to be equal to or lower than the clogging determination value **A** (step S320: YES), it is determined that the current first exhaust temperature Thi is relatively low and thus the clogging degree of the NOx storage reduction catalyst 31 is relatively high. That is, it is diagnosed that the NOx storage reduction catalyst 31 is clogged. Therefore, in order to reduce the amount of collected matter, the cause of clogging of the catalyst 31, a temperature increase process of the NOx storage reduction catalyst 31 is executed (in step S330). The temperature increase process is carried out in the same manner as the temperature increase process in step S240 of the distal portion regeneration of the embodiment.

Subsequently, it is determined whether or not the first exhaust temperature Thi is equal to or higher than a clogging-free determination value B (in step S340). The clogging-free determination value B is used for determining whether or not the NOx storage reduction catalyst 31 is free from clogging. The clogging-free determination value B is set to a predetermined value corresponding to the first exhaust temperature Thi at which the catalyst 31 is free from clogging. By setting.the clogging-free determination value B to a value larger than at least the clogging determination value A, at least lowering of the clogging degree can be diagnosed.

If the first exhaust temperature Thi is lower than the clogging-free determination value B (step S340: NO), the procedure of step 330 is continued. In other words, the temperature increase process of the NOx storage reduction catalyst 31 is continuously carried out.

In contrast, if the first exhaust temperature Thi is determined to be equal to or higher than the clogging-free determination value B (step S340: YES), it is diagnosed that the amount of collected matter in the NOx storage reduction catalyst 31 has been sufficiently decreased, or the catalyst 31 has been freed from clogging. The temperature increase process of the catalyst 31 is thus ended (in step S350) and the procedure of Fig. 6 is ended.

In accordance with the above-described distal portion regeneration, the clogging state of the NOx storage reduction catalyst 31 is diagnosed and the clogging degree thereof is lowered.

Further, in a similar manner, it is possible to diagnose the clogging state of the DPNR catalyst 32 and lower the clogging degree thereof based on the second exhaust temperature Tho.

Also, the clogging state of the NOx storage reduction catalyst 31 can be reliably diagnosed.

The illustrated embodiment may be modified as follows.

In the embodiment, the exhaust temperature control procedure of Fig. 2 may be omitted. Also in this case, as the clogging degree of the NOx storage reduction catalyst 31 becomes higher, the temperature difference ΔT becomes greater and the first exhaust temperature Thi becomes lower, as indicated by Fig. 4. It is thus possible to reliably diagnose the clogging state of the NOx storage reduction catalyst 31.

In the illustrated embodiment, it is determined whether or not to perform the temperature increase process depending on the diagnosis of the clogging state of the exhaust purifying member. Such diagnosis may be used in different suitable manners. For example, in correspondence with the diagnosis that the exhaust purifying member is clogged, a warning lamp visible to the driver may be turned on. It is also possible to omit the temperature increase process while ensuring at least the clogging state diagnosis of the exhaust purifying member to be reliably carried out.

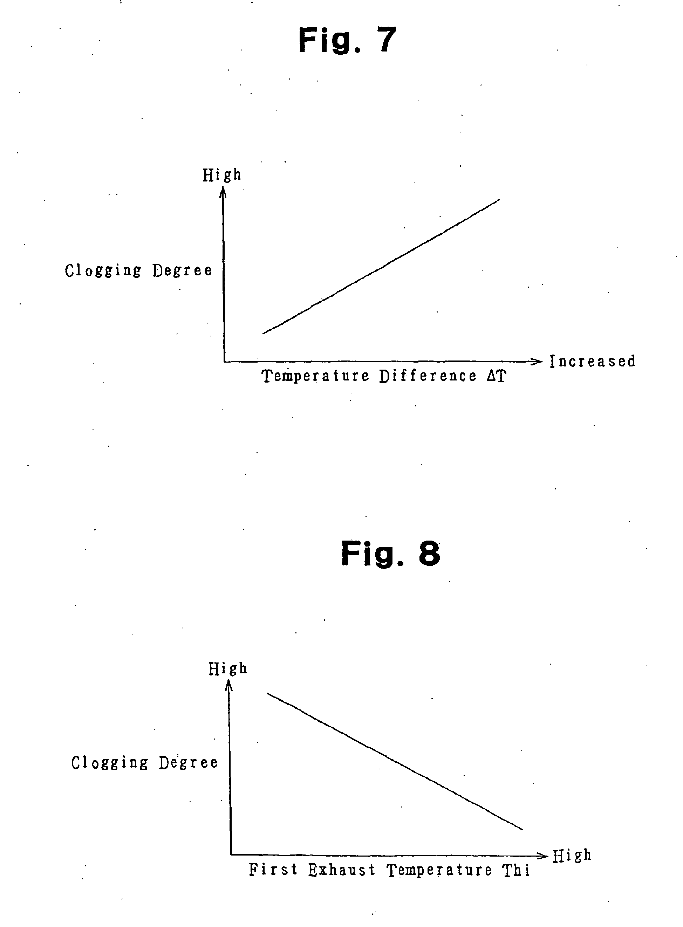

In the embodiment, the clogging degree of the NOx storage reduction catalyst 31 is estimated based on the temperature difference ΔT. More specifically, as illustrated in Fig. 7, it is determined that the clogging degree becomes higher as the temperature difference ΔT becomes greater.

Not according to the invention, the clogging degree of the NOx storage reduction catalyst 31 may be estimated based on the first exhaust temperature Thi. More specifically, as illustrated in Fig. 8, it may be determined that the clogging degree becomes higher as the first exhaust temperature Thi becomes lower.

As has been described, it is possible to estimate the clogging degree of the NOx storage reduction catalyst 31 in the first embodiment. In correspondence with the estimation, the heating amount of the catalyst 31 in the temperature increase process may be set. For example, as the estimated clogging degree becomes higher, the fuel supply for regenerating the distal portion of the catalyst 31 may be increased or the exhaust flow may be reduced. In this manner, the NOx storage reduction catalyst 31 may be efficiently heated, thus achieving the distal portion regeneration efficiently.

In the embodiment, the clogging determination value α and the clogging-free determination value β may be variably selected in correspondence with the engine operational state, for example, the engine load. In this case, even if the temperature difference ΔT at which the NOx storage reduction catalyst 31 is free from clogging is varied depending on the engine operational state, the clogging and clogging-free determination values α, β are varied in correspondence with such variation. The diagnosis accuracy of the clogging state of the catalyst 31 is thus improved.

The first exhaust temperature Thi is varied also depending on the engine operational state. Therefore, not according to the invention, the clogging state diagnosis of the NOx storage reduction catalyst 31 may be based on the difference between a reference temperature varied depending on the engine operational state and the first exhaust temperature Thi. For example, if the difference between the reference temperature and the first exhaust temperature Thi is equal to or greater than a predetermined value, it may be diagnosed that the NOx storage reduction catalyst 31 is clogged. In this case, the changing amount of the exhaust temperature caused by such clogging can be reliably acquired, making it possible to diagnose the clogging state of the catalyst 31 further reliably.

Further, if the diagnosis is based on the fact that the clogging degree of the catalyst 31 is gradually heightened as the difference between the reference temperature and the first exhaust temperature Thi is increased, the clogging degree of the catalyst 31 is also reliably diagnosed.

Also, the clogging determination value **A** and the clogging-free determination value B may be varied according to the engine operational state, for example, the engine load.

In the illustrated embodiment and the modifications thereof, the number of the exhaust purifying members arranged in the exhaust passage 26, for example, in the catalytic device 30, may be changed as needed. If three or more exhaust purifying members are provided, the second temperature sensor 34 may be located at any desired position, as long as the second temperature sensor 34 is located downstream of the exhaust purifying member downstream of the first temperature sensor 33.

In the illustrated embodiment and the modifications thereof, the type of the exhaust purifying members arranged in the exhaust passage 26, for example, in the catalytic device 30, may be changed as needed. For example, the DPNR catalyst 32 may be changed to an exhaust purifying member functioning only as a DPF (Diesel Particulate Filter), which is a PM filter for collecting particulate matter from exhaust gas. Further, if different types of exhaust purifying members are disposed in the catalytic device 30, the arrangement of the exhaust purifying members with respect to the exhaust flow may be selected as desired. For example, in the embodiment, the DPNR catalyst 32 may be located upstream of the NOx storage reduction catalyst 31 in the catalytic device 30 with respect to the exhaust flow. This arrangement makes it possible to diagnose the clogging state of the DPNR catalyst 32. Alternatively, the aforementioned DPF may be arranged upstream of the NOx storage reduction catalyst 31 with respect to the exhaust flow. This arrangement makes it possible to diagnose the clogging state of the DPF.

The diagnosis procedure that has been explained not according to the invention may be applied to the case in which a single exhaust purifying member is deployed in the exhaust passage 26.

In the illustrated embodiment and the modifications thereof, engine fuel is employed as additive. However, as long as the same operation can be obtained, any suitable additive may be employed.

In the illustrated embodiment and the modifications thereof, the injection nozzle 5 may be arranged at any desired position, as long as the injection nozzle 5 is located upstream of the catalytic device 30 with respect to the exhaust flow.

The additive supply means may correspond to an injection timing control procedure for carrying out post injection by controlling the injection timing of the fuel injection nozzles, which supply fuel to the combustion chambers. The post injection is a fuel injection performed at a timing greatly retarded from the main injection (which is performed at timing close to the top dead center of compression and in correspondence with a fuel amount substantially corresponding to the engine load). In this case, some of the fuel corresponding to the post injection is combusted at a timing slightly retarded from that of the fuel corresponding to the main injection, which is performed prior to the post injection. This raises the exhaust temperature. Also, the non-combusted remainder of the fuel corresponding to the post injection is introduced into the exhaust passage 26 together with exhaust gas. The fuel is then supplied to the exhaust purifying members as additive. Accordingly, additive is supplied to the exhaust purifying member through the post injection. Further, the post injection and the fuel injection by the above-described additive supply mechanism may be executed at the same timings.

The present examples and embodiment are to be considered as illustrative and not restrictive and the invention is not to be limited to the details given herein, but may be modified within the scope of the appended claims.

## Claims

1. An exhaust purifying apparatus for an internal combustion engine (1), the apparatus having a first exhaust purifying member (31) located in an exhaust passage (26) at a relatively upstream position with respect to the exhaust flow, a second exhaust purifying member (32) located downstream of the first exhaust purifying member (31) with respect to the exhaust flow and additive supply means (5) for supplying additive to the first exhaust purifying member (31),
the apparatus **being characterized by:**
a first temperature sensor (33), located downstream of the first exhaust purifying member (31) with respect to the exhaust flow, the first temperature sensor (33) detects the temperature (Thi) of exhaust gas at an exit of the first exhaust purifying member (31);
diagnosis means (25) for diagnosing the state of clogging of the first exhaust purifying member (31) based on an exhaust temperature (Thi) that is detected by the first temperature sensor (33) when the additive is supplied to the first exhaust purifying member (31); and
a second temperature sensor (34) located downstream of the second exhaust purifying member (32) with respect to the exhaust flow, the second temperature sensor (34) detects the temperature (Tho) of exhaust gas at an exit of the second exhaust purifying member (32);
wherein the diagnosis means (25) diagnoses the state of clogging of the first exhaust purifying member (31) based on a difference (ΔT) between exhaust temperatures (Thi, Tho) that are detected by the first and second temperature sensors (33, 34) when the additive is supplied to the first exhaust purifying member (31).

2. The apparatus according to claim 1, **characterized in that** the lower an exhaust temperature (Thi) that is detected by the first temperature sensor (33) when the additive is supplied to the first exhaust purifying member (31), the higher the degree of clogging of the first exhaust purifying member (31) determined by the diagnosis means (25).

3. The apparatus according to claim 1, **characterized in that** the greater the difference between the exhaust temperatures (Thi, Tho), the higher the degree of clogging of the first exhaust purifying member (31) determined by the diagnosis means (25).

4. The apparatus according to claim 1 or 3, **characterized by** exhaust temperature control means (25) that adjusts the amount of the additive that is supplied to the first exhaust purifying member (31) by the additive supply means (5), such that an exhaust temperature (Tho) that is detected by the second temperature sensor (34) when the additive is supplied to the first exhaust purifying member (31) seeks a target exhaust temperature (PT) that is varied depending on the operational state of the engine (1).

5. The apparatus according to claim 4 **characterized in that** the higher an exhaust temperature (Tho) that is detected by the second temperature sensor (34) when the additive is supplied to the first exhaust purifying member (31) compared to the target exhaust temperature (PT), the less the amount of additive that is supplied to the first exhaust purifying member (31) by the additive supply means (5).

6. The apparatus according to any one of claims 1 to 5, **characterized by** heating means that increases the temperature of the first exhaust purifying member (31) thereby decreasing the amount of collected matter on the first exhaust purifying member (31), wherein the apparatus determines whether the temperature of the first exhaust purifying member (31) should be increased by the heating means based on the diagnosis of the first exhaust purifying member (31) by the diagnosis means (25).

7. The apparatus according to claim 6, **characterized in that** the heating means sets the degree of temperature increase of the first exhaust purifying member (31) according to the diagnosis of the first exhaust purifying member (31) by the diagnosis means (25).

8. The apparatus according to claim 6 or 7, **characterized in that**, when increasing the temperature of the first exhaust purifying member (31), the heating means simultaneously decreases the flow rate of exhaust gas through adjustment of an engine control amount.

9. The apparatus according to claim 8, **characterized in that** the engine control amount is at least one of the opening degree of a throttle valve (16) for adjusting the amount of intake air, the opening degree of an exhaust gas recirculation valve (15) for adjusting the amount of recirculated exhaust gas, and the opening degree of an exhaust throttle valve (40) for adjusting the flow rate of exhaust gas.

10. The apparatus according to any one of claims 1 to 9, **characterized in that** the additive supply means (5) is an additive supply mechanism located in the exhaust passage (26).

11. The apparatus according to any one of claims 1 to 10, **characterized in that** the additive supply means (5) causes a fuel injection valve for supplying fuel to an engine combustion chamber to perform post injection, thereby supplying the additive to the first exhaust purifying member (31).

12. The apparatus according to any one of claims 1 to 13, **characterized in that** the first exhaust purifying member (31) includes a NOx catalyst that removes nitrogen oxides in exhaust gas.

13. The apparatus according to any one of claims 1 to 14, **characterized in that** the first exhaust purifying member (31) includes a filter for trapping particulate matter in exhaust gas.

## Patentansprüche

1. Abgasreinigungsvorrichtung für einen Verbrennungsmotor (1), wobei die Vorrichtung ein erstes Abgasreinigungselement (31), das in einer Abgasleitung (26) an einer in Bezug auf die Abgasströmung verhältnismäßig stromauf befindlichen Position angeordnet ist, ein zweites Abgasreinigungselement (32), das in Bezug auf die Abgasströmung stromabwärts des ersten Abgasreinigungselements (31) angeordnet ist, und eine Additivzuführeinrichtung (5) zum Zuführen eines Additivs zu dem ersten Abgasreinigungselement (31) aufweist,
wobei die Vorrichtung **gekennzeichnet ist durch**:
einen ersten Temperatursensor (33), der in Bezug auf die Abgasströmung stromabwärts des ersten Abgasreinigungselements (31) angeordnet ist, wobei der erste Temperatursensor (33) die Temperatur (Thi) des Abgases an einem Ausgang des ersten Abgasreinigungselements (31) erfasst;
eine Diagnoseeinrichtung (25) zum Diagnostizieren des Zustands einer Verstopfung des ersten Abgasreinigungselements (31), basierend auf einer **durch** den ersten Temperatursensor (33) erfassten Abgastemperatur (Thi), wenn dem ersten Abgasreinigungselement (31) das Additiv zugeführt wird; und
einen zweiten Temperatursensor (34), der in Bezug auf die Abgasströmung stromabwärts des zweiten Abgasreinigungselements (32) angeordnet ist, wobei der zweite Temperatursensor (34) die Temperatur (Tho) des Abgases an einem Ausgang des zweiten Abgasreinigungselements (32) erfasst;
wobei die Diagnoseeinrichtung (25) den Zustand der Verstopfung des ersten Abgasreinigungselements (31) basierend auf einer Differenz (ΔT) zwischen den Abgastemperaturen (Thi, Tho), die **durch** den ersten und den zweiten Temperatursensor (33, 34) erfasst werden, diagnostiziert, wenn dem ersten Abgasreinigungselement (31) das Additiv zugeführt wird.

2. Vorrichtung nach Anspruch 1, **dadurch gekennzeichnet, dass**, je niedriger eine durch den ersten Temperatursensor (33) erfasste Abgastemperatur (Thi) ist, wenn dem ersten Abgasreinigungselement (31) das Additiv zugeführt wird, desto höher ist der durch die Diagnoseeinrichtung (25) bestimmte Grad der Verstopfung des ersten Abgasreinigungselements (31).

3. Vorrichtung nach Anspruch 1, **dadurch gekennzeichnet, dass**, je größer die Differenz zwischen den Abgastemperaturen (Thi, Tho) ist, desto höher ist der durch die Diagnoseeinrichtung (25) bestimmte Grad der Verstopfung des ersten Abgasreinigungselements (31).

4. Vorrichtung nach Anspruch 1 oder 3, **gekennzeichnet durch** eine Abgastemperatursteuereinrichtung (25), die die Menge des Additivs einstellt, die dem ersten Abgasreinigungselement (31) **durch** die Additivzuführeinrichtung (5) zugeführt wird, so dass eine **durch** den zweiten Temperatursensor (34) erfasste Abgastemperatur (Tho), wenn das Additiv dem ersten Abgasreinigungselement (31) zugeführt wird, eine Soll-Abgastemperatur (PT) zu erreichen sucht, die in Abhängigkeit vom Betriebszustand des Motors (1) variiert wird.

5. Vorrichtung nach Anspruch 4, **dadurch gekennzeichnet, dass**, je höher eine durch den zweiten Temperatursensor (34) erfasste Abgastemperatur (Tho), wenn das Additiv dem ersten Abgasreinigungselement (31) zugeführt wird, im Vergleich zur Soll-Abgastemperatur (PT) ist, desto geringer ist die Menge des Additivs, das dem ersten Abgasreinigungselement (31) durch die Additivzufähreinrichtung (5) zugeführt wird.

6. Vorrichtung nach einem der Ansprüche 1 bis 5, **gekennzeichnet durch** eine Heizeinrichtung, die die Temperatur des ersten Abgasreinigungselements (31) erhöht, wodurch die Menge der angesammelten Partikel auf dem ersten Abgasreinigungselement (31) verringert wird, wobei die Vorrichtung basierend auf der Diagnose des ersten Abgasreinigungselements (31) **durch** die Diagnoseeinrichtung (25) bestimmt, ob die Temperatur des ersten Abgasreinigungselements (31) **durch** die Heizeinrichtung erhöht werden soll.

7. Vorrichtung nach Anspruch 6, **dadurch gekennzeichnet, dass** die Heizeinrichtung den Grad des Temperaturanstiegs des ersten Abgasreinigungselements (31) gemäß der Diagnose des ersten Abgasreinigungselements (31) durch die Diagnoseeinrichtung (25) einstellt.

8. Vorrichtung nach Anspruch 6 oder 7, **dadurch gekennzeichnet, dass**, wenn die Temperatur des ersten Abgasreinigungselements (31) erhöht wird, die Heizeinrichtung gleichzeitig die Strömungsrate des Abgases durch Einstellen eines Motorsteuerungsbetrags verringert.

9. Vorrichtung nach Anspruch 8, **dadurch gekennzeichnet, dass** es sich bei dem Motorsteuerungsbetrag um zumindest den Öffnungsgrad eines Drosselklappenventils (16) zum Einstellen der Saugluftmenge, den Öffnungsgrad eines Abgasrückführventils (15) zum Einstellen der Menge eines rückgeführten Abgases und/oder um den Öffnungsgrad eines Abgasdrosselklappenventils (40) zum Einstellen der Strömungsrate des Abgases handelt.

10. Vorrichtung nach einem der Ansprüche 1 bis 9, **dadurch gekennzeichnet, dass** es sich bei Additivzufiihreinrichtung (5) um einen Additivzufizhrmechanismus handelt, der in der Abgasleitung (26) angeordnet ist.

11. Vorrichtung nach einem der Ansprüche 1 bis 5, **dadurch gekennzeichnet, dass** die Additivzuführeinrichtung (5) bewirkt, dass ein Kraftstoffeinspritzventil einem Motorverbrennungsraum einen Kraftstoff zum Ausrühren einer Nacheinspritzung zuführt, wodurch das Additiv dem ersten Abgasreinigungselement (31) zugeführt wird.

12. Vorrichtung nach einem der Ansprüche 1 bis 13, **dadurch gekennzeichnet, dass** das erste Abgasreinigungselement (31) einen NOx-Katalysator beinhaltet, der die Stickoxide im Abgas entfernt.

13. Vorrichtung nach einem der Ansprüche 1 bis 14, **dadurch gekennzeichnet, dass** das erste Abgasreinigungselement (31) einen Filter zum Einfangen der Partikel im Abgas beinhaltet.

## Revendications

1. Dispositif de purification d'échappement pour un moteur à combustion interne (1), le dispositif ayant un premier élément de purification d'échappement (31) disposé dans un passage d'échappement (26) dans une position relativement en amont par rapport à l'écoulement d'échappement, un deuxième élément de purification d'échappement (32) disposé en aval du premier élément de purification d'échappement (31) par rapport à l'écoulement d'échappement et des moyens d'alimentation en additif (5) destinés à délivrer un additif au premier élément de purification d'échappement (31), le dispositif étant **caractérisé par** :
un premier capteur de température (33), disposé en aval du premier élément de purification d'échappement (31) par rapport à l'écoulement d'échappement, le premier capteur de température (33) détectant la température (Thi) du gaz d'échappement au niveau d'une sortie du premier élément de purification d'échappement (31) ;
des moyens de diagnostic (25) destinés à diagnostiquer l'état de colmatage du premier élément de purification d'échappement (31) sur la base d'une température d'échappement (Thi) qui est détectée par le premier capteur de température (33) quand l'additif est délivré au premier élément de purification d'échappement (31) ; et
un deuxième capteur de température (34) disposé en aval du deuxième élément de purification d'échappement (32) par rapport à l'écoulement d'échappement, le deuxième capteur de température (34) détectant la température (Tho) du gaz d'échappement au niveau d'une sortie du deuxième élément de purification d'échappement (32) ;
les moyens de diagnostic (25) diagnostiquant l'état de colmatage du premier élément de purification d'échappement (31) sur la base d'une différence (ΔT) entre des températures d'échappement (Thi, Tho) qui sont détectées par les premier et deuxième capteurs de température (33, 34) quand l'additif est délivré au premier élément de purification d'échappement (31).

2. Dispositif selon revendication 1, **caractérisé en ce que**, plus une température d'échappement (Thi) qui est détectée par le premier capteur de température (33) quand l'additif est délivré au premier élément de purification d'échappement (31) est basse, plus le degré de colmatage du premier élément de purification d'échappement (31) déterminé par les moyens de diagnostic (25) est élevé.

3. Dispositif selon la revendication 1, **caractérisé en ce que**, plus la différence entre les températures d'échappement (Thi, Tho) est grande, plus le degré de colmatage du premier élément de purification d'échappement (31) déterminé par les moyens de diagnostic (25) est élevé.

4. Dispositif selon la revendication 1 ou 3, **caractérisé par** des moyens de commande de température d'échappement (25) qui ajustent la quantité de l'additif qui est délivré au premier élément de purification d'échappement (31) par les moyens d'alimentation en additif (5), de telle sorte qu'une température d'échappement (Tho) qui est détectée par le deuxième capteur de température (34) quand l'additif est délivré au premier élément de purification d'échappement (31) cherche à atteindre une température d'échappement de cible (PT) qui est modifiée en fonction de l'état opérationnel du moteur (1).

5. Dispositif selon revendication 4, **caractérisé en ce que**, plus la température d'échappement (Tho) qui est détectée par le deuxième capteur de température (34) quand l'additif est délivré au premier élément de purification d'échappement (31) comparée à la température d'échappement de cible (PT) est élevée, plus la quantité d'additif qui est délivré au premier élément de purification d'échappement (31) par les moyens d'alimentation en additif (5) est faible.

6. Dispositif selon l'une quelconque des revendications 1 à 5, **caractérisé par** des moyens de chauffage qui augmente la température du premier élément de purification d'échappement (31) en diminuant ainsi la quantité de matière collectée sur le premier élément de purification d'échappement (31), le dispositif déterminant si la température du premier élément de purification d'échappement (31) doit être augmentée par les moyens de chauffage sur la base du diagnostic du premier élément de purification d'échappement (31) par les moyens de diagnostic (25).

7. Dispositif selon la revendication 6, **caractérisé en ce que** les moyens de chauffage place le degré de hausse de la température du premier élément de purification d'échappement (31) selon le diagnostic du premier élément de purification d'échappement (31) par les moyens de diagnostic (25).

8. Dispositif selon la revendication 6 ou 7, **caractérisé en ce que**, en augmentant la température du premier élément de purification d'échappement (31), les moyens de chauffage diminuent simultanément le débit de gaz d'échappement par l'ajustement d'une valeur de commande de moteur.

9. Dispositif selon la revendication 8, **caractérisé en ce que** la valeur de commande de moteur est au moins le degré d'ouverture d'un papillon des gaz (16) destiné à ajuster la quantité d'air admis, le degré d'ouverture d'une soupape de recyclage de gaz d'échappement (15) destinée à ajuster la quantité de gaz d'échappement recyclé, ou le degré d'ouverture d'un papillon des gaz d'échappement (40) destiné à ajuster le débit de gaz d'échappement.

10. Dispositif selon l'une quelconque des revendications 1 à 9, **caractérisé en ce que** les moyens d'alimentation en additif (5) sont constitués par un mécanisme d'alimentation en additif disposé dans le passage d'échappement (26).

11. Dispositif selon l'une quelconque des revendications 1 à 10, **caractérisé en ce que** les moyens d'alimentation en additif (5) amène une soupape d'injection de carburant destinée à délivrer du carburant à une chambre de combustion de moteur à réaliser une post-injection, en délivrant ainsi l'additif au premier élément de purification d'échappement (31).

12. Dispositif selon l'une quelconque des revendications 1 à 13, **caractérisé en ce que** le premier élément de purification d'échappement (31) comprend un catalyseur de NOx qui élimine des oxydes d'azote dans le gaz d'échappement.

13. Dispositif selon l'une quelconque des revendications 1 à 14, **caractérisé en ce que** le premier élément de purification d'échappement (31) comprend un filtre destiné à piéger des matières en particules dans le gaz d'échappement.
